(19) **Europäisches Patentamt / European Patent Office / Office européen des brevets**

(11) **EP 3 397 800 B1**

(12) **FASCICULE DE BREVET EUROPEEN**

(45) Date de publication et mention de la délivrance du brevet:
**25.12.2024 Bulletin 2024/52**

(21) Numéro de dépôt: **16829285.2**

(22) Date de dépôt: **23.12.2016**

(51) Classification Internationale des Brevets (IPC):
**D04H 1/4209** (2012.01) **D04H 1/732** (2012.01)
**D01G 9/00** (2006.01) **E04F 21/08** (2006.01)

(52) Classification Coopérative des Brevets (CPC):
**D04H 1/732; D04H 1/4209**

(86) Numéro de dépôt international:
**PCT/FR2016/053660**

(87) Numéro de publication internationale:
**WO 2017/115044 (06.07.2017 Gazette 2017/27)**

(54) **PRODUIT D'ISOLATION COMPRENANT DE LA LAINE MINERALE EN VRAC**

ISOLATIONSPRODUKT MIT MASSEMINERALWOLLE

INSULATION PRODUCT CMOPRISING BULK MINERAL WOOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2015 FR 1563438**

(43) Date de publication de la demande:
**07.11.2018 Bulletin 2018/45**

(73) Titulaire: **SAINT-GOBAIN ISOVER**
**92400 Courbevoie (FR)**

(72) Inventeurs:
• **DOVETTA, Nicolas**
**92340 Bourg la reine (FR)**
• **SIBAND, Mathilde**
**75010 Paris (FR)**
• **DE FRANCQUEVILLE, Foucault**
**92130 Issy les Moulineaux (FR)**

(74) Mandataire: **Saint-Gobain Recherche**
**41 Quai Lucien Lefranc**
**93300 Aubervilliers (FR)**

(56) Documents cités:
**EP-A1- 2 511 586**     **FR-A1- 2 591 621**
**JP-A- 2006 097 203**     **US-A1- 2006 266 429**
**US-A1- 2013 193 365**     **US-A1- 2013 221 567**

**Description**

L'invention concerne un produit d'isolation comprenant de la laine minérale.

La laine minérale est un très bon isolant thermique et acoustique car elle comprend des fibres minérales enchevêtrées qui lui confère une structure poreuse et élastique. Une telle structure permet d'emprisonner de l'air et d'absorber ou atténuer les bruits. En outre, la laine minérale est fabriquée essentiellement à partir de matières minérales, notamment naturelles ou de produits recyclés (verre recyclé), et présente ainsi un bilan environnemental intéressant. Enfin, la laine minérale étant à base de matériaux incombustibles par nature, elle n'alimente pas le feu et ne propage pas les flammes. De préférence, la laine minérale est choisie parmi la laine de verre ou la laine de roche.

On distingue d'une part les produits d'isolation de type panneaux ou rouleaux qui se présentent sous forme de plaques ou de matelas de fibres dont la cohésion est assurée par un liant (aussi dénommé encollage) qui lie les fibres entre elles par adhésion ponctuelle, d'autre part des produits de type vrac qui se présentent sous forme de petits paquets de fibres enchevêtrées formant des particules de taille centimétrique dans lesquels aucun agent collant n'assure la cohésion des fibres dans les paquets.

La fabrication de la laine minérale dite en vrac (ou « loose-fill » en anglais) comporte au moins les étapes suivantes :

- une étape de fusion des matières premières telles que du verre, dans un four de fusion,
- une étape de fibrage,
- une étape de formation d'un matelas de laine minérale,
- une étape de nodulation par broyage.

La fabrication de la laine minérale vrac peut comprendre en outre les étapes suivantes :

- une étape d'enduction par des agents tels que des agents anti-statiques et/ou un adjuvant de cohésion, préalablement, concomitamment ou suivant la nodulation, et/ou
- une étape d'ensachage.

A la fin de l'étape de nodulation, la laine minérale sous forme de nodules ou de flocons peut être utilisée telle quelle comme produit d'isolation en vrac ou isolant en vrac (« loose fill insulation ») par épandage, soufflage ou remplissage de cavités. Un isolant en vrac correspond, dans le domaine du bâtiment, à une variété de matériaux présentés sous forme de petites particules dont la texture varie de granuleuse à floconneuse.

La laine minérale est avantageusement utilisée sous forme de nodules ou de flocons comme constituant principal dans les produits d'isolation en vrac pour espaces difficiles d'accès tels que les planchers de combles perdus non aménagés ou difficilement accessibles.

Ces produits d'isolation en vrac sont généralement appliqués par soufflage mécanique à l'aide d'une machine à souffler qui permet la projection sur une surface ou l'injection dans une cavité d'un produit d'isolation à partir d'un tuyau de sortie. Ces produits d'isolation en vrac sont donc principalement installés par projection directement dans l'espace à isoler tel que des combles ou par injection dans une cavité murale. Ces produits d'isolation en vrac sont également appelés produits d'isolation à souffler.

Le produit d'isolation une fois soufflé doit être le plus homogène possible pour éviter les ponts thermiques et améliorer ainsi les performances thermiques. Cependant, lorsque le produit d'isolation est soufflé, peu importe le diamètre du tuyau de sortie, la laine minérale sous forme de nodules ou de flocons n'est pas totalement homogène. La conductivité thermique du produit d'isolation résultant n'est pas optimisée.

Plusieurs solutions ont été envisagées pour améliorer l'homogénéité des produits d'isolation en vrac lors du convoi pneumatique.

Les demandes de brevet EP1165998 et US 2006/0266429 divulguent des tuyaux flexibles qui présentent des moyens mécaniques permettant de détendre l'isolant en vrac lors de son installation. Ces moyens mécaniques sont des saillies s'étendant sur la surface interne des tuyaux.

La demande JP 2006/328609 divulgue un procédé complexe pour détendre de la laine de roche avant son stockage en silo, comprenant une étape selon laquelle on transporte des agglomérats de fibres par un flux d'air turbulent qualifié par un nombre de Reynolds supérieur à 200 000, à l'intérieur d'une conduite pourvue de plusieurs séries d'aiguilles et de zones en relief pour que les agglomérats entrant en collision sur ces dernières subissent une ouverture mécanique.

Ces solutions souvent trop complexes ne donnent pas entière satisfaction.

Le demandeur a mis au point un nouveau procédé de préparation permettant d'obtenir un produit d'isolation comprenant de la laine minérale présentant des performances thermiques améliorées.

Le procédé de l'invention comprend une étape d'aération dans un dispositif comprenant une enceinte et au moins un moyen susceptible de générer un écoulement gazeux turbulent. Lors de cette étape d'aération, un flux de gaz porteur est introduit dans l'enceinte et une laine minérale sous forme de nodules ou de flocons est soumise à l'écoulement turbulent de ce gaz porteur avec entrainement dans un sens selon une direction A et en sens inverse selon une direction B opposée à la direction A de sorte qu'il existe dans l'enceinte au moins un plan perpendiculaire à la direction A où se croisent de la laine minérale entrainée dans la direction A et de la laine minérale entrainée dans la direction B.

Le profil des vitesses moyennes de la laine minérale dans l'écoulement selon la direction A comprend au moins un point de recirculation où la composante de la vitesse parallèle à la direction A est négative ce qui permet de générer l'écoulement selon la direction B. De préférence il existe plusieurs points de recirculation, pour former dans l'écoulement une ou des boucles ou bulles de recirculation.

On note que le procédé de l'invention utilise un écoulement turbulent en régime instationnaire. Les explications fournies dans la présente demande au sujet des profils de vitesse des écoulements concernent des vitesses moyennes dans le temps pendant une durée suffisante à caractériser le phénomène observé.

Cette étape d'aération diminue significativement la densité de la laine minérale sous forme de nodules ou de flocons mais surtout homogénéise sa structure. De manière surprenante, l'expansion et/ou l'homogénéisation de la laine minérale soumise à l'étape d'aération de l'invention est bien meilleure que celle pouvant être obtenue par les procédés connus d'homogénéisation. Le produit d'isolation résultant peut être compacté suite à l'étape d'aération tout en conservant une structure plus homogène.

L'amélioration des performances thermiques se traduit notamment, par rapport aux laines minérales non aérées selon le procédé de l'invention, par une diminution de la conductivité thermique à densité égale ou par une diminution de la densité à conductivité thermique égale. Les produits d'isolation résultant possèdent également à densité égale une résistance à l'air beaucoup plus élevée.

Quand on applique le procédé sur des nodules de laine minérale existants, l'invention permet de détendre les nodules ou les flocons de sorte qu'il devient pratiquement impossible de déterminer leur dimension individuelle. Cela peut être démontré par un simple examen visuel des produits d'isolation.

C'est ainsi que la laine minérale en vrac selon l'invention prend une forme nouvelle, que l'on peut qualifier de duvet, car elle est très similaire aux matériaux de garnissage en duvet animal. On entend donc par « duvet » dans la présente demande un produit de laine minérale vrac où les fibres constituant la laine minérale sont quasiment individualisées, et la structure en paquets des flocons a été quasiment détruite.

La laine minérale est choisie parmi la laine de verre ou la laine de roche.

La laine de verre est généralement définie comme un produit obtenu à partir d'une matière minérale en fusion issu d'un mélange de matières premières vitrifiables et transformée en fibre par un procédé le plus souvent centrifuge. La fusion de verre sous forme d'un liquide relativement visqueux produit des fibres relativement longues et fines.

La laine de roche est généralement définie comme un produit obtenu à partir d'une matière minérale en fusion issu de roches naturelles et transformée en fibre par un procédé dit à cascade de rotors. La fusion de roches naturelles sous forme d'un liquide très fluide produit des fibres relativement courtes et épaisses.

Avec la laine de roche, la forme en duvet peut être difficile à atteindre, et l'invention couvre aussi des flocons de laine de roche d'une structure nouvelle.

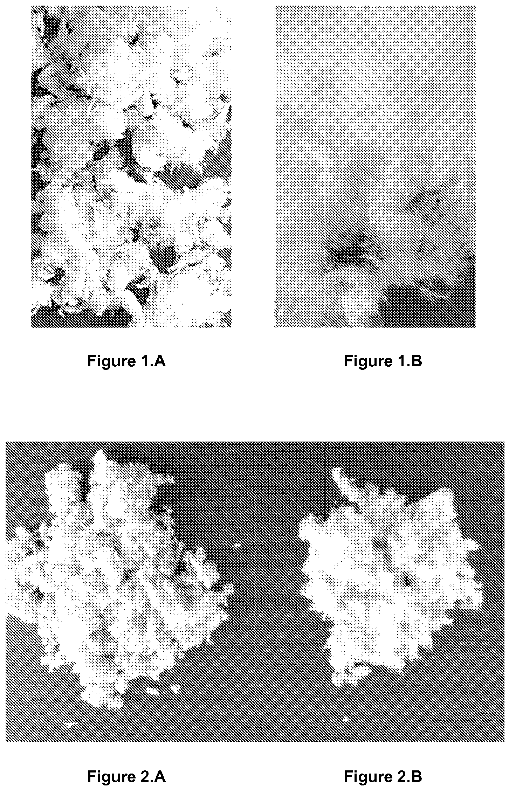

La figure 1 comprend des photographies représentant respectivement :

- Figure 1.A : une laine de verre sous forme de nodules ou de flocons n'ayant pas subi l'étape d'aération selon l'invention et
- Figure 1.B : une laine de verre sous forme de duvet ayant subi l'étape d'aération selon l'invention.

La figure 2 comprend des photographies représentant respectivement :

- Figure 2.A : une laine de roche sous forme de nodules ou de flocons n'ayant pas subi l'étape d'aération selon l'invention et
- Figure 2.B : une laine de roche sous forme de nodules ou de flocons « détendue » ayant subi l'étape d'aération selon l'invention.

La meilleure homogénéité obtenue par le procédé de l'invention ressort clairement du simple examen visuel des produits d'isolation. En revanche, la caractérisation de ces produits nouveaux par leur structure macroscopique et microscopique est difficile à établir. A cette fin, le demandeur a mis au point une méthode de mesure de distribution de taille d'agglomérats utilisant des tamis vibrants exposée ci-après.

Le procédé de l'invention permet de détendre la laine de verre et la laine de roche.

L'invention concerne un produit d'isolation sous forme de duvet comprenant de la laine de verre en vrac caractérisé en ce que la répartition massique des agglomérats obtenue par tamisage de 2 à 5 g de produit d'isolation à l'aide d'une tamiseuse à vibrations comprenant un empilement de tamis et une amplitude d'oscillation maximale de 3 mm réglée entre 1,5 et 2,5 mm, de préférence entre 1,8 et 2,2 mm et mieux à 2 mm, pendant 5 minutes, présente :

- un pourcentage massique d'agglomérats passant au tamis de 6 mm inférieur à 5 % en masse, de préférence inférieur à 3 % en masse et/ou
- un pourcentage massique d'agglomérats passant au tamis de 13 mm inférieur à 50 % en masse, de préférence inférieur à 40 % en masse, voire inférieur à 35 % masse.

L'invention concerne un produit d'isolation comprenant de la laine roche en vrac sous forme de duvet, de nodules ou de flocons, caractérisé en ce que la répartition massique des agglomérats obtenue par tamisage de 2 à 5 g de produit d'isolation à l'aide d'une tamiseuse à vibrations comprenant un empilement de tamis et une amplitude d'oscillation maximale de 3 mm réglée entre 1,5 et 2,5 mm, de préférence entre 1,8 et 2,2 mm et mieux à 2 mm, pendant 5 minutes, satisfait la relation suivante, (% Agglomérats 6-13) - (% Agglomérats < 6) ≥ 5 %, avec :

- (% Agglomérats 6-13) correspondant au pourcentage massique d'agglomérats présentant un passant compris entre les tamis de 6 mm et de 13 mm et
- (% Agglomérats < 6) correspondant au pourcentage massique d'agglomérats présentant un passant au tamis de 6 mm.

Les produits d'isolation selon l'invention possèdent une conductivité thermique beaucoup plus faible et une résistance à l'air beaucoup plus élevée. Une autre possibilité pour caractériser les produits selon l'invention peut se baser sur le couple « conductivité thermique / densité » ou sur le couple « résistance à l'air / densité ».

L'invention concerne également un produit d'isolation comprenant de la laine de verre en vrac sous forme de duvet caractérisé en ce qu'il présente une densité « d » en kg/m$^3$ et une conductivité thermique « λ » en mW.m$^{-1}$.K$^{-1}$ satisfaisant la relation suivante pour des densités d comprise entre 7 et 14 kg/m$^3$; λ < A + 0,3d + 205/d, avec A compris entre 17 et 23, bornes incluses.

Dans l'équation ci-dessus, A vaut, par ordre de préférence croissant : 22, 21, 20, 19, 18 ou 17, tel que λ < 23 + 0,3d + 205/d, λ < 20 + 0,3d + 205/d ou λ < 18 + 0,3d + 205/d.

L'invention concerne également un produit d'isolation comprenant de la laine de verre en vrac sous forme de duvet caractérisé en ce qu'il présente pour une densité « d » comprise entre 9,5 et 10,5 kg/m$^3$, une conductivité thermique « λ » inférieure à 42 mW.m$^{-1}$.K$^{-1}$, de préférence inférieure à 41 mW.m$^{-1}$.K$^{-1}$.

L'invention concerne également un produit d'isolation comprenant de la laine de verre en vrac sous forme de duvet caractérisé en ce qu'il présente une résistance au passage de l'air (selon la norme EN29053) supérieure ou égale à 1 kPa.s/m$^2$, de préférence supérieure ou égale à 2 kPa.s/m$^2$, de préférence supérieure ou égale à 5 kPa.s/m$^2$, pour une densité comprise entre 10 et 20 kg/m$^3$, de préférence comprise entre 10 et 15 kg/m$^3$.

L'invention concerne également un produit d'isolation comprenant de la laine de roche sous forme de duvet, de nodules ou de flocons, caractérisé en ce qu'il présente une densité « d » en kg/m$^3$ et une conductivité thermique « λ » en mW.m$^{-1}$.K$^{-1}$ satisfaisant la relation suivante pour des densités d comprise entre 50 et 80 kg/m$^3$ : λ < -0,1 d + 45 ; de préférence λ < -0,1 d + 44,5 ; λ < -0,1 d + 44 ; λ < -0,1 d + 43.

L'invention concerne également un produit d'isolation comprenant de la laine de roche caractérisé en ce qu'il présente une résistance au passage de l'air (selon la norme EN29053) :

- supérieure ou égale à 1 kPa.s/m$^2$, de préférence supérieure ou égale à 2 kPa.s/m$^2$ voire supérieure ou égale à 3 kPa.s/m$^2$ pour une densité comprise entre 40 et 50 kg/m$^3$, et/ou
- supérieure ou égale à 10 kPa.s/m$^2$, de préférence supérieure ou égale à 15 kPa.s/m$^2$ pour une densité comprise entre 60 et 80 kg/m$^3$.

Enfin, l'invention concerne un procédé d'isolation thermique par projection directement sur une surface ou par injection dans une cavité d'un produit d'isolation selon l'invention.

Les caractéristiques préférées qui figurent dans la suite de la description sont applicables aussi bien aux différents produits d'isolation comprenant de la laine de verre ou de la laine de roche que, le cas échéant, au procédé d'isolation.

Le produit d'isolation selon l'invention est essentiellement à base de laine minérale détendue. Dans la présente description, on appelle :

- laine minérale sous forme de nodules ou de flocons non-aérée, une laine minérale n'ayant pas les caractéristiques de structure nouvelles qui peuvent être obtenues suivant une étape d'aération conforme à l'invention,
- laine minérale sous forme de nodules ou de flocons détendue ou aérée ou sous forme de duvet, une laine minérale ayant les caractéristiques de structure nouvelles qui peuvent être obtenues suivant une étape d'aération conforme à l'invention.

La laine minérale est choisie parmi la laine de verre ou la laine de roche.

Les nodules ou flocons de laine minérale sont des fibres en paquets, et non des fibres individualisées comme les fibres de verre textiles. Ces nodules ou flocons de laine minérale ont une longueur comprise entre 0,05 et 5 cm, notamment entre 0,1 et 1 cm. Ces flocons ou nodules sont formés de fibres qui s'enchevêtrent sous forme de petits paquets, petites mèches ou « bouloches ». Par longueur des flocons ou nodules, on entend dans la présente description la longueur de ces paquets dans leur plus grande dimension.

Idéalement, la laine minérale est suffisamment détendue pour que l'on ne distingue plus aisément les nodules et les flocons.

Lorsque le produit d'isolation comprend de la laine de verre, on ne distingue plus les flocons ou nodules. Le produit d'isolation se présente sous forme d'un duvet, c'est-à-dire un produit en couche de fibres discontinues maintenues déposées ou accumulées ensemble sous une forme analogue à une nappe fibreuse dans laquelle les fibres sont simplement enchevêtrées (et non collées) en une structure lâche et bouffante. Des portions du duvet ou de la nappe peuvent être prélevées sans que la structure volumique ne soit affectée.

La laine de verre comprend des fibres de verre. Des nodules ou flocons en laine de verre produits par fibrage de verre sont par exemple décrits dans le brevet EP 2 511 586 au moyen d'un dispositif comprenant notamment un centrifugeur ou assiette de centrifugation et un panier. Un filet de verre fondu alimente le centrifugeur et s'écoule dans le panier. Les fibres de laine de verre sont mises en nodules comme expliqué dans le document FR-A-2 661 687. Ces fibres de verres sont enchevêtrées.

Les fibres de laine de verre se distinguent des fibres de verre dites « textiles » obtenues par étirement mécanique à grande vitesse du verre en fusion sous la forme de filament calibré.

La laine de verre présente, par ordre de préférence croissant, un micronaire :

- inférieur à 20 L/min, inférieur à 15 L/min, inférieur à 12 L/min, inférieur à 10 L/min,
- supérieur à 2 L/min, supérieur à 3 L/min, supérieur à 4 L/min, supérieur à 5 L/min.

Le micronaire est mesuré selon la méthode décrite dans le document WO-A-03/098209.

Les fibres de verre de la laine de verre sont discontinues. Elles présentent un diamètre moyen de préférence inférieur à 5 $\mu$m, voire même inférieur à 4 $\mu$m.

Les nodules ou flocons de laine de verre sont par exemple des flocons en laine de verre du type utilisé pour l'isolation en laine soufflée, par exemple du type des laines commercialisées par les sociétés Saint-Gobain Isover sous les marques Comblissimo® ou Kretsull® ou par la société Certainteed sous la marque Insulsafe®. Ces flocons sont généralement dépourvus de liant et peuvent contenir des additifs antipoussières et/ou anti-statiques tels que des huiles. Selon des réalisations particulières, le produit d'isolation comprenant de la laine de verre satisfait une ou plusieurs des caractéristiques suivantes :

- le pourcentage massique d'agglomérats présentant un passant compris entre les tamis de 25 mm et de 32 mm par rapport aux agglomérats présentant un passant au tamis de 32 mm est inférieur à 10 % en masse, de préférence inférieur à 5 % en masse, voire inférieur à 3 % en masse,
- le pourcentage massique d'agglomérats présentant un passant compris entre les tamis de 19 mm et de 25 mm par rapport à la masse des agglomérats présentant un passant au tamis de 32 mm est supérieur à 10 % en masse, de préférence supérieur à 20 % en masse, supérieur à 30 % en masse, voire supérieur à 40 % en masse,
- le pourcentage massique d'agglomérats présentant un passant compris entre les tamis de 13 mm et de 25 mm par rapport à la masse des agglomérats présentant un passant au tamis de 32 mm est supérieur à 50 %, de préférence supérieur à 55 %, supérieur à 60 %, supérieur à 70 %,
- le pourcentage massique d'agglomérats présentant un passant compris entre les tamis de 13 mm et de 32 mm par rapport à la masse des agglomérats présentant un passant au tamis de 32 mm est supérieur à 60 %, de préférence supérieur à 65 %, supérieur à 70 %, supérieur à 80 %,
- il comprend au moins 75 %, de préférence au moins 95 % de laine de verre par rapport à la masse totale du produit d'isolation.

La laine de roche comprend des fibres de roche. La laine de roche présente un fasonaire d'au moins 250. Cette grandeur également appelée indice de finesse est mesurée de manière conventionnelle dans le domaine des laines de roche. Le fasonaire est déterminé de la façon suivante : on pèse une éprouvette (5 g) constituée par une touffe de laine minérale exempte d'huile et de liant mais pouvant comporter des composants non fibreux (infibrés ou « slugs »ou « shots »). Cette éprouvette est comprimée dans un volume donné et est traversée par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultat de fasonaire est la moyenne des pertes de charge observées pour dix éprouvettes.

Selon des réalisations particulières, le produit d'isolation comprenant de la laine de roche satisfait une ou plusieurs des caractéristiques suivantes :

- il satisfait la relation suivante : (% Agglomérats 6-13) - (% Agglomérats < 6) ≥ 10 %,
- le pourcentage massique d'agglomérats présentant un passant au tamis de 6 mm est :

  - inférieur à 40 %, inférieur à 45 %, inférieur à 30 %, et/ou
  - supérieur à 10 %, supérieur à 20 %,

- le pourcentage massique d'agglomérats présentant un passant au tamis de 13 mm est :

  - inférieur à 95 %, inférieur à 90 %, inférieur à 80 %, et/ou
  - supérieur à 50 %, supérieur à 60 %, supérieur à 70 %,

- le pourcentage massique d'agglomérats présentant un passant compris entre les tamis de 6 mm et de 13 mm est supérieur à 40 %, de préférence supérieur à 45 %, supérieur à 50 %, supérieur à 60 %,
- le pourcentage massique d'agglomérats présentant un passant compris entre les tamis de 6 mm et de 19 mm est supérieur à 50 %, de préférence supérieur à 55 %, supérieur à 60 %, supérieur à 70 %,
- le pourcentage massique d'agglomérats présentant un passant au tamis de 25 mm ou au tamis de 34 mm est de 100 %,
- la laine de roche comprend des fibres de minérales enchevêtrées présentant un fasonaire d'au moins 250.

Le produit d'isolation comprend, par ordre de préférence croissant, au moins 75 %, au moins 80 %, au moins 85 %, au moins 90 %, au moins 94 %, au moins 95 %, au moins 96 %, au moins 97 %, au moins 98 %, au moins 99 % de laine minérale, de préférence de laine minérale choisie parmi la laine de verre ou la laine de roche, par rapport à la masse totale du produit d'isolation.

Le produit d'isolation comprend, par ordre de préférence croissant, au moins 75 %, au moins 80 %, au moins 85 %, au moins 90 %, au moins 94 %, au moins 95 %, au moins 96 %, au moins 97 %, au moins 98 %, au moins 99 % de fibres minérale, de préférence de fibres de verre ou de fibres de roche, par rapport à la masse totale du produit d'isolation.

Le produit d'isolation comprend, par ordre de préférence croissant, au moins 75 %, au moins 80 %, au moins 85 %, au moins 90 %, au moins 94 %, au moins 95 %, au moins 96 %, au moins 97 %, au moins 98 %, au moins 99 % de matière minérale par rapport à la masse totale du produit d'isolation.

Enfin, l'invention concerne également un procédé d'isolation thermique par projection ou soufflage d'un produit d'isolation selon l'invention directement dans l'espace à isoler ou par injection d'un produit d'isolation selon l'invention dans une cavité notamment murale ou toute autre forme de paroi creuse à isoler.

## I. Protocole de mesure de la distribution massique de taille des agglomérats

Cette mesure permet de caractériser la structure des produits d'isolation comprenant de la laine minérale notamment de la laine minérale de verre ou de roche. Le principe de la mesure consiste à mettre en vibration un empilement de tamis de diamètres différents et à trier les agglomérats (ou particules solides) résultant de l'étape de vibration en fonction de leur taille.

Un tamis correspond à une grille de maillage plus ou moins fin, servant à trier des agglomérats, fixés sur un cadre. Les tamis sont mis en vibration à l'aide d'une tamiseuse correspondant à un appareil vibrant sur lequel sont installés les tamis.

Suite à l'étape d'aération, il est parfois impossible de déterminer la dimension des nodules ou des flocons notamment lorsque le produit d'isolation comprend de la laine de verre. Le produit d'isolation se présente alors sous forme d'un duvet, c'est-à-dire un produit en couche de fibres discontinues déposées ensemble sous forme d'une nappe (voire figure 1.B) à la texture aérée et bouffante.

La méthode de mesure de la distribution massique est destructive car la vibration tend à séparer le duvet en agglomérats.

De même, même lorsque des nodules ou des flocons sont encore présents après l'étape d'aération, comme cela peut être le cas pour la laine roche, la vibration peut modifier leurs dimensions.

Selon l'invention, on utilise le terme « agglomérat » pour qualifier la matière récupérée lors du tamisage sur chaque tamis ou dans le récipient inférieur. On fait ainsi une distinction entre :

- les nodules ou flocons résultant du procédé de fabrication de la laine minérale ou persistant après l'étape d'aération, et

- les agglomérats obtenus après la mise en vibration.

### 1. Matériel et instrumentation

Le matériel nécessaire pour cette mesure comprend :

- un échantillon de laine minérale, de préférence soufflée,
- une balance de précision ± 0,05 g,
- un bécher en plastique d'environ 500 mL,
- des tamis et un récipient inférieur (sans trou),
- une tamiseuse automatique, « Retsch Sieve Shaker » modèle RX-24.

Des tamis de 20 cm (8") de diamètre avec des tailles de trous définies ci-après ont été utilisés :

- 6 mm (0,25"),
- 13 mm (0,5"),
- 19 mm (0,75"),
- 25 mm (1"),
- 32 mm (1,25"),
- 38 mm (1,5"),
- 44 mm (1,75").

### 2. Mode opératoire

Les étapes suivantes sont réalisées :

- Récupérer un échantillon représentatif de laine minérale ou du produit d'isolation aéré, (ci-après prélèvement) dans une boite d'environ 40x40x40 cm ou plus. La laine minérale ne doit pas être compressée lors de sa manipulation ou de son transport.
- Peser entre 3,0 et 3,5 +/- 0,1 g de produit dans le bécher en plastique.
- Empiler les tamis du plus petit maillage (6 mm) au plus grand sur la tamiseuse.
- Placer délicatement le prélèvement sur le tamis supérieur, c'est-à-dire le tamis présentant le plus gros maillage. Il est important qu'un maximum de la surface soit recouverte afin d'éviter que les gros agglomérats empêchent les plus petits de descendre.
- Placer et serrer le couvercle sur l'empilement de tamis. Dans le cas où les tamis ne seraient pas centrés et/ou mal coincés, les vibrations sont beaucoup trop fortes et faussent la mesure.
- Mettre la tamiseuse sous tension et régler sa puissance, puis le temps de mesure à 5 min.
- Peser la matière sur chacun des tamis une fois la vibration terminée. Le pourcentage massique est calculé en divisant la masse de matière sur le tamis concerné par la somme des masses de tous les tamis.

La tamiseuse à vibrations comprend un empilement de tamis et une amplitude d'oscillation maximale de 3 mm. L'amplitude d'oscillation est réglée entre 1,5 et 2,5 mm, de préférence entre 1,8 et 2,2 mm et mieux à 2 mm. La mise en vibration dure pendant 5 minutes. Pour obtenir l'amplitude d'oscillation désirée, on règle la puissance de la tamiseuse. Par exemple, la puissance de la tamiseuse est réglée à 65% lorsque 4 tamis sont utilisés et entre 45% et 65% lorsque 7 tamis sont utilisés pour obtenir le même niveau de vibration.

### 3. Expression de résultats

Les résultats sont exprimés en pourcentages massiques par tamis. Cinq mesures sont effectuées avec de nouveaux prélèvements au minimum. On calcule ensuite la moyenne et l'écart type.

### II. Exemples

Une laine de verre et une laine de roche, toutes deux sous forme de nodules ou de flocons, non aérées ont été utilisées dans ces exemples.

Avant l'étape d'aération, la laine de verre sous forme de nodules ou de flocons comprend des fibres de verre avec un micronaire de 5,6 L/min. Elle présente une densité de 11,6 kg/m$^3$.

Avant l'étape d'aération, la laine de roche sous forme de nodules ou de flocons comprend des fibres de roche avec un fasonaire de 250. Elle présente une densité de 74 kg/m$^3$.

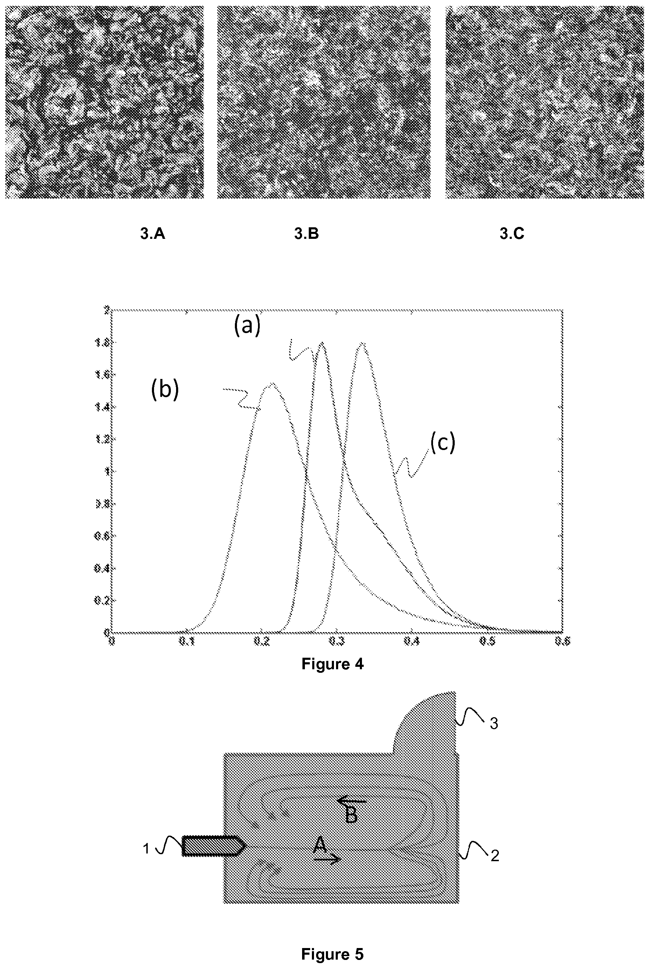

Un dispositif permettant de réaliser l'étape d'aération selon l'invention est illustré sur la figure 5. Ce dispositif comprend:

- un système d'injection d'air 1 générant un premier jet d'air,
- une enceinte 2,
- une ouverture de sortie 3.

Les dimensions de ce dispositif sont les suivantes, 30 cm x 30 cm x 40 cm avec le côté le plus long situé dans la direction du jet.

Pour la laine de verre, le premier jet d'air est un jet « haute pression » à environ 4 bar de pression d'entrée.

Pour la laine de roche, le premier jet d'air est un jet obtenu à l'aide d'une machine de soufflage fournissant une pression d'entrée suffisante.

La laine minérale sous forme de nodules ou de flocons est introduite dans l'enceinte 2 par des moyens non représentés. Par exemple, on introduit en général environ 100 g de laine de verre. Pour la laine de roche, on introduit approximativement la même quantité en volume.

Puis, la laine minérale sous forme de nodules ou de flocons est soumise à un écoulement turbulent par entrainement dans un gaz porteur selon une direction A à l'aide d'un premier jet d'air haute pression généré par le système d'injection d'air 1.

L'enceinte est configurée pour que s'établisse un régime turbulent apte à entraîner la laine minérale dans le gaz porteur en sens inverse selon une direction B opposée à la direction A de sorte qu'il existe dans l'enceinte au moins un plan perpendiculaire à la direction A, où se croisent de la laine minérale entrainée dans la direction A et de la laine minérale entrainée en sens inverse dans la direction B. Sur la figure 1, A et B représentent deux vecteurs vitesse de même direction et de sens opposé. Par convention, on déclare que la vitesse selon le vecteur A est positive et la vitesse selon le vecteur B est négative.

L'entrainement dans un gaz porteur selon une direction B opposée à la direction A résulte du choix d'un rapport adapté entre la section du premier jet sur la dimension de l'enceinte.

Lorsque l'on représente le profil des vitesses moyennes, il existe au moins un (de préférence) plusieurs points de recirculation dans l'enceinte où la composante de la vitesse suivant la direction A est négative ce qui correspond à un écoulement selon la direction B et ainsi des mouvements de recirculation à contre-courant de A.

Cette zone de recirculation correspond à une quantité « q » de laine minérale qui va à un moment donné aller à contresens par rapport à la direction A et passer au moins deux fois au même endroit. Les lignes de courants dessinées sur la figure 5 suggèrent qu'une quantité de laine minérale fait quelques boucles en passant au même endroit plusieurs fois.

Les dimensions de l'enceinte sont également adaptées de sorte que :

- les dimensions perpendiculaires à la direction du jet initial soit suffisamment grandes pour générer des points de recirculation dans des plans de l'enceinte et
- la dimension parallèle à la direction du jet soit suffisamment petite pour multiplier les mouvements de recirculation.

Lorsque la laine minérale est suffisamment aérée, le produit d'isolation est expulsé de l'enceinte par l'ouverture de sortie 3, soit par activation d'un mécanisme d'ouverture, soit parce que l'enceinte a été dimensionnée pour que le temps de séjour entre l'entrée de la laine minérale et l'ouverture de sortie corresponde au temps nécessaire pour atteindre le degré d'homogénéisation désiré.

On obtient ainsi un produit d'isolation selon l'invention comprenant :

- de la laine de verre sous forme de duvet, ou
- de la laine de roche sous forme de duvet ou de nodules ou de flocons détendus.

Ce dispositif permet d'aérer 3 kg de produit d'isolation comprenant de la laine de verre par heure.

Les produits d'isolation selon l'invention ont, après l'étape d'aération, des densités faibles notamment d'environ 4 kg/m$^3$ pour des produits à base de laine de verre et d'environ 50 kg/m$^3$ pour des produits à base de laine de roche. Ces produits peuvent subir si nécessaire une étape de compression. L'étape de compression peut être réalisée en pressant le produit entre deux plaques.

Le rapport de la densité avant aération sur la densité après aération est de préférence supérieur à 2, de préférence supérieur à 2,5. La densité est très importante dans le cas de des produits d'isolation à souffler car elle définit le pouvoir couvrant du produit correspondant à la surface que l'on peut recouvrir avec une masse donnée de produit à une hauteur définie.

**1. Observations visuelles et tomographiques**

Les figures 1 et 2 comprennent des photographies représentant respectivement :

- Figure 1.A : une laine de verre sous forme de nodules ou de flocons n'ayant pas subi l'étape d'aération selon l'invention,
- Figure 1.B : un produit d'isolation comprenant de la laine de verre en vrac sous forme de duvet ayant subi l'étape d'aération selon l'invention,
- Figure 2.A : une laine de roche sous forme de nodules ou de flocons n'ayant pas subi l'étape d'aération selon l'invention,
- Figure 2.B : un produit d'isolation comprenant de la laine de roche sous forme de nodules ou de flocons « détendue » ayant subi l'étape d'aération selon l'invention.

Ces photographies montrent la meilleure homogénéité des produits d'isolation obtenus selon l'invention.
Les images par tomographie de la figure 3 illustrent respectivement :

- Figure 3.A : une laine de verre sous forme de nodules ou de flocons n'ayant pas subi l'étape d'aération selon l'invention présentant une densité de 10 kg/m$^3$,
- Figure 3.B : un produit d'isolation comprenant de la laine de verre en vrac sous forme de duvet ayant subi l'étape d'aération selon l'invention et présentant une densité de 4 kg/m$^3$,
- Figure 3.C : un produit d'isolation comprenant la laine de verre en vrac sous forme de duvet ayant subi l'étape d'aération selon l'invention ainsi qu'une étape de compactage et présentant une densité de 10 kg/m$^3$.

Le traitement de ces images est illustré par le graphique de la figure 4 qui représente les variations en termes de niveau de gris en volume. On trouve en abscisse l'intensité et en ordonné le nombre de pixels présentant cette intensité. Un point de la courbe correspond au nombre de pixels trouvés dans l'image présentant un niveau de gris donné. Les courbes (a), (b) et (c) correspondent respectivement aux produits d'isolation des figures 3.A, 3.B et 3.C.
Ces images ainsi que le traitement de ces images montrent également la meilleure homogénéité des produits d'isolation selon l'invention. Cela se traduit par une meilleure répartition en termes de niveaux de gris. Les produits d'isolations selon l'invention ont des pics plus larges et quasiment gaussiens, alors que la laine de verre non aérée à une distribution plus étroite et asymétrique.
Enfin, le produit d'isolation ayant subi une étape de compactage suite à l'étape d'aération illustré par l'image 3.C conserve ses propriétés avantageuses en termes d'homogénéité. On peut donc grâce l'invention obtenir des produits d'isolation homogènes de densités variables.

**2. Mesure de la distribution massique de taille des agglomérats**

La distribution de taille des agglomérats par la méthode des tamis vibrants a été déterminée pour les produits suivants :

- PI LV A : Produit d'isolation comprenant de la laine de verre aéré sous forme de duvet,
- PI LV NA : Produit d'isolation comprenant de la laine de verre non aéré sous forme de nodules ou de flocons,
- PI LR A : Produit d'isolation comprenant de la laine de roche aéré sous forme de nodules ou de flocons,
- PI LR NA : Produit d'isolation comprenant de la laine de roche non aéré sous forme de nodules ou de flocons.

Les produits d'isolation comprenant de la laine de verre sont sous forme de duvet de laine en vrac. Or, la mesure de la distribution par tamis vibrants sépare le duvet en agglomérats. Toutefois, on retrouve des quantités de matière parfois importantes au-dessus des tamis supérieurs présentant des tailles de trous supérieures ou égales à 32 mm, c'est-à-dire au-dessus des tamis 32 mm, 38 mm et 44 mm. La présence et la répartition d'agglomérats au-dessus de ces tamis est aléatoire. C'est pourquoi, pour les produits d'isolation à base de la laine de verre aéré, la distribution massique pour des agglomérats de taille comprise entre 0 et 32 mm a également été calculée. A cette fin, le pourcentage massique est calculé en divisant la masse de matière sur le tamis concerné par la somme des masses de toute la matière présente en-dessous du tamis dont la taille de trous est égale à 32 mm.
Les autres produits d'isolation comprennent 100 % d'agglomérats présentant un passant inférieur à 32 mm. La distribution en pourcentage massique s'étend entre 0 et 32 mm.
Le tableau 1 reprend les résultats de la distribution en pourcentage massique pour les produits d'isolation à base de laine de verre :

- pour les agglomérats dont la taille varie de 0 à plus de 44 mm,
- pour les agglomérats dont la taille varie de 0 à 32 mm.

Le tableau 2 comprend les pourcentages massiques cumulés et les pourcentages massiques cumulés inversés pour les produits d'isolation à base de laine de verre avec des agglomérats passant au tamis de 0 à plus de 44 mm.

Le tableau 3 comprend les pourcentages massiques cumulés et les pourcentages massiques cumulés inversés pour les produits d'isolation à base de laine de verre avec des agglomérats passant au tamis de 0 à 32 mm.

Le tableau 4 comprend pour les produits d'isolation à base de laine de roche comprenant des agglomérats dont la taille varie de 0 à 32 mm :

- les résultats de la distribution en pourcentage massique,
- les pourcentages massiques cumulés.

Lorsque l'on représente graphiquement la répartition massique avec en abscisse les tailles des agglomérats en fonction de leur passant au tamis par ordre croissant et en ordonnée les proportions massiques, on obtient des courbes présentant un ou deux pics. Le pic présentant la hauteur maximale est qualifié de pic principal.

L'étape d'aération a pour effet de déplacer ce pic vers la droite et de l'écraser. Cela signifie que l'étape d'aération augmente la taille des agglomérats et uniformise la répartition notamment entre 0 et 32 mm.

Cette répartition différente semble contribuer à l'obtention des meilleures propriétés en terme de performance thermique.

| Tableau 1 | | Distribution en % de 0 à plus de 44 mm | | | | | | | | | Distribution en % de 0 à 32 mm | | | | | |
|---|---|---|---|---|---|---|---|---|---|---|---|---|---|---|---|---|
| Produit | Tamis | Σ | < 6 | [6;13[ | [13;19[ | [19;25[ | [25;32[ | [32;38[ | [38;44[ | >44 | Σ | < 6 | [6;13[ | [13;19[ | [19;25[ | [25;32[ |
| PI LV A | 7 | 3,42 | 1% | 17% | 15% | 22% | 0% | 0% | 45% | | 1,89 | 1% | 31% | 27% | 40% | 0% |
| | 8 | 3,31 | 2% | 22% | 43% | 33% | 0% | 0% | 0% | 0% | 3,31 | 2% | 22% | 43% | 33% | 0% |
| | 8 | 3,33 | 1% | 23% | 23% | 53% | 0% | 0% | 0% | 0% | 3,33 | 1% | 23% | 23% | 53% | 0% |
| | 8 | 3,44 | 1% | 16% | 57% | 14% | 12% | 0% | 0% | 0% | 3,44 | 1% | 16% | 57% | 14% | 12% |
| | 8 | 3,16 | 2% | 15% | 20% | 12% | 11% | 9% | 0% | 32% | 1,86 | 2% | 25% | 33% | 21% | 18% |
| | 8 | 3,55 | 2% | 17% | 46% | 3% | 2% | 7% | 24% | 0% | 2,46 | 2% | 25% | 66% | 4% | 3% |
| | 8 | 3,68 | 2% | 23% | 29% | 13% | 0% | 0% | 0% | 34% | 2,44 | 2% | 34% | 43% | 20% | 0% |
| | 8 | 3,64 | 1% | 16% | 17% | 5% | 0% | 0% | 0% | 61% | 1,42 | 1% | 42% | 44% | 13% | 0% |
| | 8 | 3,02 | 2% | 25% | 39% | 21% | 1% | 13% | 0% | 0% | 2,63 | 2% | 28% | 45% | 24% | 1% |
| | 8 | 3,65 | 1% | 25% | 31% | 22% | 0% | 0% | 0% | 21% | 2,90 | 1% | 32% | 39% | 28% | 0% |
| | 8 | 3,40 | 1% | 14% | 36% | 9% | 1% | 6% | 0% | 32% | 2,09 | 1% | 23% | 59% | 15% | 1% |
| PI LV NA | 5 | 3-3,5 | 4% | 58% | 13% | 0% | 25% | - | - | - | 3-3,5 | 4% | 58% | 13% | 0% | 25% |
| | 5 | 3-3,5 | 3% | 53% | 27% | 7% | 10% | - | - | - | 3-3,5 | 3% | 53% | 27% | 7% | 10% |
| | 5 | 3-3,5 | 6% | 65% | 22% | 5% | 2% | - | - | - | 3-3,5 | 6% | 65% | 22% | 5% | 2% |
| | 5 | 3-3,5 | 7% | 33% | 58% | 3% | 0% | - | - | - | 3-3,5 | 7% | 33% | 58% | 3% | 0% |
| | 5 | 3-3,5 | 6% | 38% | 49% | 6% | 0% | - | - | - | 3-3,5 | 6% | 38% | 49% | 6% | 0% |
| | 5 | 3-3,5 | 5% | 31% | 40% | 1% | 24% | - | - | - | 3-3,5 | 5% | 31% | 40% | 1% | 24% |
| | 5 | 3-3,5 | 6% | 54% | 11% | 3% | 26% | - | - | - | 3-3,5 | 6% | 54% | 11% | 3% | 26% |
| | 5 | 3-3,5 | 5% | 59% | 27% | 2% | 7% | - | - | - | 3-3,5 | 5% | 59% | 27% | 2% | 7% |
| | 5 | 3-3,5 | 5% | 58% | 29% | 0% | 8% | - | - | - | 3-3,5 | 5% | 58% | 29% | 0% | 8% |

\* Lorsque la tamiseuse comprend 5 tamis, la catégorie « [25 ; 32[ » correspond à « > 25 mm ». Il est dans ce cas possible qu'une faible quantité d'aggloméré présente un passant supérieur à 32 mm.

EP 3 397 800 B1

**Tableau 2**

| Produit | Tamis | Σ | % Cumulé de 0 à plus de 44 mm | | | | | | | | % Cumulé inversé de plus de 44 à 0 | | | | | | | |
|---|---|---|---|---|---|---|---|---|---|---|---|---|---|---|---|---|---|---|
| | | | < 6 | [6;13[ | [13;19[ | [19;25[ | [25;32[ | [32;38[ | [38;44[ | >44 | < 6 | [6;13[ | [13;19[ | [19;25[ | [25;32[ | [32;38[ | [38;44[ | >44 |
| | 7 | 3,42 | 1% | 18% | 33% | 55% | 55% | 55% | 100% | - | 100% | 99% | 82% | 67% | 45% | 45% | 45% | 0% |
| | 8 | 3,31 | 2% | 24% | 67% | 100% | 100% | 100% | 100% | 100% | 100% | 98% | 76% | 33% | 0% | 0% | 0% | 0% |
| | 8 | 3,33 | 1% | 24% | 47% | 100% | 100% | 100% | 100% | 100% | 100% | 99% | 76% | 53% | 0% | 0% | 0% | 0% |
| | 8 | 3,44 | 1% | 17% | 74% | 88% | 100% | 100% | 100% | 100% | 100% | 99% | 83% | 26% | 12% | 0% | 0% | 0% |
| PI LV A | 8 | 3,16 | 2% | 16% | 36% | 48% | 59% | 68% | 68% | 100% | 100% | 98% | 84% | 64% | 52% | 41% | 32% | 32% |
| | 8 | 3,55 | 2% | 19% | 65% | 67% | 69% | 76% | 100% | 100% | 100% | 98% | 81% | 35% | 33% | 31% | 24% | 0% |
| | 8 | 3,68 | 2% | 24% | 53% | 66% | 66% | 66% | 66% | 100% | 100% | 98% | 76% | 47% | 34% | 34% | 34% | 34% |
| | 8 | 3,64 | 1% | 17% | 34% | 39% | 39% | 39% | 39% | 100% | 100% | 99% | 83% | 66% | 61% | 61% | 61% | 61% |
| | 8 | 3,02 | 2% | 26% | 65% | 86% | 87% | 100% | 100% | 100% | 100% | 98% | 74% | 35% | 14% | 13% | 0% | 0% |
| | 8 | 3,65 | 1% | 26% | 57% | 79% | 79% | 79% | 79% | 100% | 100% | 99% | 74% | 43% | 21% | 21% | 21% | 21% |
| | 8 | 3,40 | 1% | 15% | 52% | 61% | 61% | 68% | 68% | 100% | 100% | 99% | 85% | 48% | 39% | 39% | 32% | 32% |
| | 5 | 3-3,5 | 4% | 62% | 75% | 75% | 100% | - | - | - | 100% | 96% | 38% | 25% | 25% | 0% | 0% | 0% |
| | 5 | 3-3,5 | 3% | 56% | 83% | 90% | 100% | - | - | - | 100% | 97% | 44% | 17% | 10% | 0% | 0% | 0% |
| | 5 | 3-3,5 | 6% | 72% | 93% | 98% | 100% | - | - | - | 100% | 94% | 28% | 7% | 2% | 0% | 0% | 0% |
| | 5 | 3-3,5 | 7% | 40% | 97% | 100% | 100% | - | - | - | 100% | 93% | 60% | 3% | 0% | 0% | 0% | 0% |
| PI LV NA | 5 | 3-3,5 | 6% | 44% | 94% | 100% | 100% | - | - | - | 100% | 94% | 56% | 6% | 0% | 0% | 0% | 0% |
| | 5 | 3-3,5 | 5% | 35% | 75% | 76% | 100% | - | - | - | 100% | 95% | 65% | 25% | 24% | 0% | 0% | 0% |
| | 5 | 3-3,5 | 6% | 60% | 71% | 74% | 100% | - | - | - | 100% | 94% | 40% | 29% | 26% | 0% | 0% | 0% |
| | 5 | 3-3,5 | 5% | 64% | 92% | 93% | 100% | - | - | - | 100% | 95% | 36% | 8% | 7% | 0% | 0% | 0% |
| | 5 | 3-3,5 | 5% | 63% | 92% | 92% | 100% | - | - | - | 100% | 95% | 37% | 8% | 8% | 0% | 0% | 0% |

| Tableau 3 | | | % Cumulé de 0 à 32 mm | | | | | % Cumulé inversé de plus de 32 à 0 | | | | |
|---|---|---|---|---|---|---|---|---|---|---|---|---|
| Produit | Tamis | Σ | < 6 | [6;13[ | [13;19[ | [19;25[ | > 25 | < 6 | [6;13[ | [13;19[ | [19;25[ | >25[ |
| PI LV A | 7 | 1,89 | 1% | 32% | 59% | 99% | 99% | 99% | 98% | 67% | 40% | 0% |
| | 8 | 3,31 | 2% | 24% | 67% | 100% | 100% | 100% | 98% | 76% | 33% | 0% |
| | 8 | 3,33 | 1% | 24% | 47% | 100% | 100% | 100% | 99% | 76% | 53% | 0% |
| | 8 | 3,44 | 1% | 17% | 74% | 88% | 100% | 100% | 99% | 83% | 26% | 12% |
| | 8 | 1,86 | 2% | 26% | 60% | 81% | 99% | 99% | 97% | 73% | 39% | 18% |
| | 8 | 2,46 | 2% | 26% | 93% | 96% | 99% | 99% | 98% | 73% | 7% | 3% |
| | 8 | 2,44 | 2% | 36% | 79% | 99% | 99% | 99% | 98% | 64% | 20% | 0% |
| | 8 | 1,42 | 1% | 43% | 86% | 99% | 99% | 99% | 99% | 56% | 13% | 0% |
| | 8 | 2,63 | 2% | 30% | 75% | 99% | 100% | 100% | 98% | 70% | 25% | 1% |
| | 8 | 2,90 | 1% | 33% | 72% | 100% | 100% | 100% | 99% | 67% | 28% | 0% |
| | 8 | 2,09 | 1% | 24% | 83% | 98% | 99% | 99% | 98% | 75% | 16% | 1% |
| PI LV NA | 5 | 3-3,5 | 4% | 62% | 75% | 75% | 100% | 100% | 96% | 38% | 25% | 25% |
| | 5 | 3-3,5 | 3% | 56% | 83% | 90% | 100% | 100% | 97% | 44% | 17% | 10% |
| | 5 | 3-3,5 | 6% | 72% | 93% | 98% | 100% | 100% | 94% | 28% | 7% | 2% |
| | 5 | 3-3,5 | 7% | 40% | 97% | 100% | 100% | 100% | 93% | 60% | 3% | 0% |
| | 5 | 3-3,5 | 6% | 44% | 94% | 100% | 100% | 100% | 94% | 56% | 6% | 0% |
| | 5 | 3-3,5 | 5% | 35% | 75% | 76% | 100% | 100% | 95% | 65% | 25% | 24% |
| | 5 | 3-3,5 | 6% | 60% | 71% | 74% | 100% | 100% | 94% | 40% | 29% | 26% |
| | 5 | 3-3,5 | 5% | 64% | 92% | 93% | 100% | 100% | 95% | 36% | 8% | 7% |
| | 5 | 3-3,5 | 5% | 63% | 92% | 92% | 100% | 100% | 95% | 37% | 8% | 8% |

| Tableau 4 | | Distribution en % de 0 à plus de 44 mm | | | | | | | | | % Cumulé de 0 à 32 mm | | | | |
|---|---|---|---|---|---|---|---|---|---|---|---|---|---|---|---|
| Produit | Tamis | Σ | <6 | [6;13[ | [13;19[ | [19;25[ | [25;32[ | [32;38[ | [38;44[ | >44 | < 6 | [6;13[ | [13;19[ | [19;25[ | [25;32[ |
| PI LR A | 8 | 3,43 | 20% | 48% | 22% | 10% | 0% | 0% | 0% | 0% | 20% | 68% | 90% | 100% | 100% |
| | 8 | 3,45 | 40% | 52% | 8% | 0% | 0% | 0% | 0% | 0% | 40% | 92% | 100% | 100% | 100% |
| | 8 | 3,52 | 22% | 43% | 36% | 0% | 0% | 0% | 0% | 0% | 22% | 64% | 100% | 100% | 100% |
| | 8 | 3,47 | 31% | 49% | 7% | 13% | 0% | 0% | 0% | 0% | 31% | 80% | 87% | 100% | 100% |
| | 8 | 3,46 | 30% | 66% | 5% | 0% | 0% | 0% | 0% | 0% | 30% | 95% | 100% | 100% | 100% |
| PI LR NA | 8 | 3,50 | 38% | 42% | 8% | 12% | 0% | 0% | 0% | 0% | 38% | 80% | 88% | 100% | 100% |
| | 8 | 3,47 | 55% | 42% | 3% | 0% | 0% | 0% | 0% | 0% | 55% | 97% | 100% | 100% | 100% |
| | 8 | 3,39 | 72% | 28% | 0% | 0% | 0% | 0% | 0% | 0% | 72% | 100% | 100% | 100% | 100% |
| | 8 | 3,27 | 70% | 30% | 0% | 0% | 0% | 0% | 0% | 0% | 70% | 100% | 100% | 100% | 100% |
| | 8 | 3,53 | 76% | 24% | 0% | 0% | 0% | 0% | 0% | 0% | 76% | 100% | 100% | 100% | 100% |

**3.** Mesure de la conductivité thermique et de la résistance au passage à l'air

Les mesures de conductivité thermique ont été réalisées sur des produits isolants. La conductivité thermique λ d'un produit est la capacité du produit à se laisser traverser par un flux de chaleur; elle est exprimée en W/(m.K). Plus cette conductivité est faible, plus le produit est isolant, et meilleure est donc l'isolation thermique. Les valeurs de conductivité thermique en fonction de la densité ont été mesurées suivant la norme EN14064.

Des éprouvettes du produit isolant ont été conditionnées en stabilisation en poids à 23°C pour un taux d'humidité relative (HR) d'environ 50%. Les mesures ont été réalisées à une température moyenne de 10°C sur un appareil de type R-Matic sur des caisses de produits de dimensions 590 x 590 mm, à épaisseur érasée à 108 mm mesurée. La zone de mesure proprement dite est de dimension 254 x 254 mm. La conductivité thermique moyenne des produits isolants est donnée dans le tableau ci-dessous.

Les mesures de résistivité au passage de l'air suivant la norme EN29053 (méthode A), ont été réalisées sur les mêmes éprouvettes que celles de mesure de la conductivité thermique.

Plusieurs laines de verres et une laine de roche ont été utilisées pour ces essais.

La conductivité thermique et la résistivité au passage de l'air d'éprouvette de produits isolants définis ci-après a été mesurée :

- PI LV1 NA : produit isolant comprenant de la laine de verre de type 1 non aérée,
- PI LV1 A produit isolant comprenant de la laine de verre de type 1 aérée,
- PI LV2 NA : produit isolant comprenant de la laine de verre de type 2 non aérée,
- PI LV2 A produit isolant comprenant de la laine de verre de type 2 aérée,
- PI LV3 A produit isolant comprenant de la laine de verre de type 3 aérée,
- PI LV4 A produit isolant comprenant de la laine de verre de type 4 aérée,
- PI LR NA : produit isolant comprenant de la laine de roche non aérée,
- PI LR A produit isolant comprenant de la laine de roche aérée.

| Produit | Rs (Pa.s/m²) | 590x590 densité (kg/m3) | 254x254 densité (kg/m3) | Lambda (mW/(m.K)) |
|---------|--------------|-------------------------|-------------------------|--------------------|
| PI LV1 NA | 590 | 9,3 | 9,6 | 50,7 |
| | - | 9,5 | 9,6 | 48,9 |
| PI LV1 A | 5762 | 10,2 | 10,2 | 36,8 |
| | 4990 | 10,1 | 10,1 | 37,1 |
| | 5988 | 10,0 | 10,0 | 39,4 |
| | 6034 | 10,0 | 10,0 | 39,8 |
| | - | 10,1 | 10,1 | 39,8 |
| | 4990 | 9,9 | 9,9 | 40,4 |
| | 4310 | 9,7 | 9,7 | 40,7 |
| PI LV2 NA | 1642 | 11,6 | 11,6 | 46,0 |
| PI LV2 A | 1159 | 5,9 | 6,0 | 51,9 |
| | 5070 | 11,5 | 12,9 | 37,2 |
| PI LV3 A | 628 | 4,1 | 4,1 | 59,3 |
| | 5311 | 10,2 | 12,0 | 36,8 |
| | 6132 | 10,1 | 11,5 | 37,1 |
| PI LV4 A | - | 10,1 | 9,8 | 39,8 |
| | 6374 | 10,0 | 9,6 | 39,8 |
| | 6422 | 10,0 | 9,9 | 39,4 |
| | 5311 | 9,9 | 9,7 | 40,4 |
| | 4587 | 9,7 | 9,8 | 40,7 |
| | 435 | 2,9 | 3,0 | 78,9 |
| | 44615 | 29,5 | 31,2 | 31,6 |

(suite)

| Produit | Rs (Pa.s/m$^2$) | 590x590 densité (kg/m3) | 254x254 densité (kg/m3) | Lambda (mW/(m.K)) |
|---|---|---|---|---|
| PI LR NA | 5794 | 72,5 | 74,2 | 38,2 |
| PI LR A | 3525 | 39,1 | 43,0 | 39,1 |
| | 18638 | 64,8 | 71,3 | 35,8 |

En termes de performances, les produits d'isolation selon l'invention obtenus après l'étape d'aération ont une conductivité thermique très significativement plus faible.

Les produits d'isolation à base de laine de verre selon l'invention présentent tous une conductivité thermique bien inférieure à 42 mW.m$^{-1}$.K$^{-1}$, voir bien inférieure à 41 mW.m$^{-1}$.K$^{-1}$ pour des densités comprises entre 9,5 et 10,5 kg/m$^3$.

Un produit d'isolation comprenant de la laine de verre aérée présente un gain de conductivité thermique supérieur à 15 %, de préférence supérieur à 20 % par rapport à un produit d'isolation comprenant de la laine de verre non aérée à densité égale. Pour une performance donnée, il faut deux fois moins de laine de verre pour obtenir la même résistance thermique.

En effet, la laine de verre sous forme de nodules ou de flocons non aérée présente pour une densité de 10 kg/m$^3$, une conductivité thermique d'environ 53 mW.m$^{-1}$.K$^{-1}$.

Le produit d'isolation selon l'invention présente, à densité égale, une conductivité thermique d'environ 37 mW.m$^{-1}$.K$^{-1}$. Cela correspond à une diminution de 16 mW.m$^{-1}$.K$^{-1}$ et à un gain en résistance thermique à épaisseur soufflé égale de 30 %.

Le produit d'isolation selon l'invention présente, à conductivité thermique égale, une densité de 4,8 kg/m$^3$. Cela correspond à une diminution de 5,2 kg/m$^3$ représentant une économie en matière de 52 %.

## Revendications

1. Produit d'isolation comprenant de la laine de verre en vrac sous forme de duvet **caractérisé en ce que** la répartition massique des agglomérats obtenue par tamisage de 2 à 5 g de produit d'isolation à l'aide d'une tamiseuse à vibrations comprenant un empilement de tamis et une amplitude d'oscillation maximale de 3 mm réglée entre 1,5 et 2,5 mm, de préférence entre 1,8 et 2,2 mm et mieux à 2 mm, pendant 5 minutes, présente :

   - un pourcentage massique d'agglomérats passant au tamis de 6 mm inférieur à 5 % en masse, de préférence inférieur à 3 % en masse et/ou
   - un pourcentage massique d'agglomérats passant au tamis de 13 mm inférieur à 50 % en masse, de préférence inférieur à 40 % en masse, voire inférieur à 35 % masse.

2. Produit d'isolation comprenant de la laine de verre en vrac sous forme de duvet selon la revendication 1 **caractérisé en ce que** le pourcentage massique d'agglomérats présentant un passant compris entre les tamis de 25 mm et de 32 mm par rapport aux agglomérats présentant un passant au tamis de 32 mm est inférieur à 10 % en masse, de préférence inférieur à 5 % en masse, voire inférieur à 3 % en masse.

3. Produit d'isolation comprenant de la laine de verre en vrac sous forme de duvet selon l'une quelconque de revendications précédentes **caractérisé en ce que** le pourcentage massique d'agglomérats présentant un passant compris entre les tamis de 19 mm et de 25 mm par rapport à la masse des agglomérats présentant un passant au tamis de 32 mm est supérieur à 10 % en masse, de préférence supérieur à 20 % en masse, supérieur à 30 % en masse, voire supérieur à 40 % en masse.

4. Produit d'isolation comprenant de la laine de verre en vrac sous forme de duvet selon l'une quelconque de revendications précédentes **caractérisé en ce que** le pourcentage massique d'agglomérats présentant un passant compris entre les tamis de 13 mm et de 25 mm par rapport à la masse des agglomérats présentant un passant au tamis de 32 mm est supérieur à 50 %, de préférence supérieur à 55 %, supérieur à 60 %, supérieur à 70 %.

5. Produit d'isolation comprenant de la laine de verre en vrac sous forme de duvet selon l'une quelconque de revendications précédentes **caractérisé en ce que** le pourcentage massique d'agglomérats présentant un passant compris entre les tamis de 13 mm et de 32 mm par rapport à la masse des agglomérats présentant un passant au tamis de 32 mm est supérieur à 60 %, de préférence supérieur à 65 %, supérieur à 70 %, supérieur à 80 %.

6. Produit d'isolation comprenant de la laine de verre en vrac sous forme de duvet **caractérisé en ce qu'**il présente une densité « d » en kg/m$^3$ et une conductivité thermique « $\lambda$ » en mW.m$^{-1}$.K$^{-1}$ satisfaisant la relation suivante pour des densités d comprise entre 7 et 14 kg/m$^3$;
$\lambda$ < A + 0,3d + 205/d, avec A compris entre 17 et 23, bornes incluses.

7. Produit d'isolation comprenant de la laine de verre en vrac sous forme de duvet **caractérisé en ce qu'**il présente pour une densité « d » comprise entre 9,5 et 10,5 kg/m$^3$, une conductivité thermique « $\lambda$ » inférieure à 42 mW.m$^{-1}$.K$^{-1}$, de préférence inférieure à 41 mW.m$^{-1}$.K$^{-1}$.

8. Produit d'isolation comprenant de la laine de verre en vrac sous forme de duvet **caractérisé en ce qu'**il présente une résistance au passage de l'air supérieure ou égale à 1 kPa.s/m$^2$, de préférence supérieure ou égale à 2 kPa.s/m$^2$, de préférence supérieure ou égale à 5 kPa.s/m$^2$, pour une densité comprise entre 10 et 20 kg/m$^3$, de préférence entre 10 et 15 kg/m$^3$.

9. Produit d'isolation comprenant de la laine de verre en vrac sous forme de duvet selon l'une quelconque de revendications précédentes **caractérisé en ce que** la laine de verre présente un micronaire :

   - inférieur à 20 L/min, de préférence inférieur à 10 L/min,
   - supérieur à 2 L/min, de préférence à 4 L/min, supérieur à 5 L/min.

10. Produit d'isolation comprenant de la laine de verre en vrac sous forme de duvet selon l'une quelconque de revendications précédentes **caractérisé en ce qu'**il comprend au moins 75 %, de préférence au moins 95 % de laine de verre par rapport à la masse totale du produit d'isolation.

11. Produit d'isolation en vrac comprenant de la laine de roche sous forme de duvet, de nodules ou de flocons, **caractérisé en ce que** la répartition massique des agglomérats obtenue par tamisage de 2 à 5 g de produit d'isolation à l'aide d'une tamiseuse à vibrations comprenant un empilement de tamis et une amplitude d'oscillation maximale de 3 mm réglée entre 1,5 et 2,5 mm, de préférence entre 1,8 et 2,2 mm et mieux à 2 mm, pendant 5 minutes, satisfait la relation suivante, (% Agglomérats 6-13) - (% Agglomérats < 6) $\geq$ 5 %, avec :

    - (% Agglomérats 6-13) correspondant au pourcentage massique d'agglomérats présentant un passant compris entre les tamis de 6 mm et de 13 mm et
    - (% Agglomérats < 6) correspondant au pourcentage massique d'agglomérats présentant un passant au tamis de 6 mm.

12. Produit d'isolation comprenant de la laine de roche selon la revendication 11 **caractérisé en ce qu'**il satisfait la relation suivante,

$$(\% \text{ Agglomérats } 6\text{-}13) – (\% \text{ Agglomérats } < 6) \geq 10 \%.$$

13. Produit d'isolation comprenant de la laine de roche selon l'une quelconque de revendications 11 à 12 **caractérisé en ce que** le pourcentage massique d'agglomérats présentant un passant au tamis de 6 mm est :

    - inférieur à 40 %, inférieur à 45 %, inférieur à 30 %, et/ou
    - supérieur à 10 %, supérieur à 20 %.

14. Produit d'isolation comprenant de la laine de roche selon l'une quelconque de revendications 11 à 13 **caractérisé en ce que** le pourcentage massique d'agglomérats présentant un passant au tamis de 13 mm est :

    - inférieur à 95 %, inférieur à 90 %, inférieur à 80 %, et/ou
    - supérieur à 50 %, supérieur à 60 %, supérieur à 70 %.

15. Produit d'isolation comprenant de la laine de roche selon l'une quelconque de revendications 11 à 14 **caractérisé en ce que** le pourcentage massique d'agglomérats présentant un passant compris entre les tamis de 6 mm et de 13 mm est supérieur à 40 %, de préférence supérieur à 45 %, supérieur à 50 %, supérieur à 60 %.

16. Produit d'isolation comprenant de la laine de roche selon l'une quelconque de revendications 11 à 15 **caractérisé en**

**ce que** le pourcentage massique d'agglomérats présentant un passant compris entre les tamis de 6 mm et de 19 mm est supérieur à 50 %, de préférence supérieur à 55 %, supérieur à 60 %, supérieur à 70 %.

17. Produit d'isolation comprenant de la laine de roche selon l'une quelconque de revendications 11 à 16 **caractérisé en ce que** le pourcentage massique d'agglomérats présentant un passant au tamis de 25 mm ou au tamis de 34 mm est de 100 %.

18. Produit d'isolation comprenant de la laine de roche selon l'une quelconque de revendications 11 à 17 **caractérisé en ce que** la laine de roche comprend des fibres de minérales enchevêtrées présentant un fasonaire d'au moins 250.

19. Produit d'isolation comprenant de la laine de roche sous forme de duvet, de nodules ou de flocons, **caractérisé en ce qu'**il présente une densité « d » en kg/m$^3$ et une conductivité thermique « $\lambda$ » en mW.m$^{-1}$.K$^{-1}$ satisfaisant la relation suivante pour des densités d comprise entre 50 et 80 kg/m$^3$ :
$\lambda < -0,1$ d + 45 ; de préférence $\lambda < -0,1$ d + 44,5 ; $\lambda < -0,1$ d + 44 ; $\lambda < -0,1$ d + 43.

20. Produit d'isolation comprenant de la laine de roche sous forme de duvet, de nodules ou de flocons **caractérisé en ce qu'**il présente une résistance au passage de l'air :

- supérieure ou égale à 3 kPa.s/m$^2$ pour une densité comprise entre 40 et 50 kg/m$^3$, et/ou
- supérieure ou égale à 10 kPa.s/m$^2$ pour une densité comprise entre 60 et 80 kg/m$^3$.

**Patentansprüche**

1. Dämmstoff, umfassend lose Glaswolle in Form von **Daunen,**
   **dadurch gekennzeichnet, dass** die Massenverteilung der Agglomerate, die durch Sieben von 2 bis 5 g des Dämmstoffs unter Verwendung einer Rüttelsiebmaschine mit einem Siebstapel und einer maximalen Rüttelamplitude von 3 mm erhalten wird, die zwischen 1,5 und 2,5 mm, vorzugsweise zwischen 1,8 und 2,2 mm und besser auf 2 mm eingestellt ist, für die Dauer von 5 Minuten ergibt:

   - einen Massenanteil von Agglomeraten, die ein 6-mm-Sieb passieren, von weniger als 5 Massen-%, vorzugsweise weniger als 3 Massen-% und/oder
   - einen Massenanteil von Agglomeraten, die ein 13-mm-Sieb passieren, von weniger als 50 Massen-%, vorzugsweise weniger als 40 Massen-% oder sogar weniger als 35 Massen-%.

2. Dämmstoff, umfassend lose Glaswolle in Form von Daunen nach Anspruch 1, **dadurch gekennzeichnet, dass** der Massenanteil von Agglomeraten, die zwischen dem 25-mm- und dem 32-mm-Sieb passieren, im Verhältnis zu den Agglomeraten, die das 32-mm-Sieb passieren, weniger als 10 Massen-%, vorzugsweise weniger als 5 Massen-% oder sogar weniger als 3 Massen-% beträgt.

3. Dämmstoff, umfassend lose Glaswolle in Form von Daunen nach einem der vorhergehenden Ansprüche, **dadurch gekennzeichnet, dass** der Massenanteil von Agglomeraten, die zwischen dem 19-mm- und dem 25-mm-Sieb passieren, im Verhältnis zur Masse der Agglomerate, die das 32-mm-Sieb passieren, mehr als 10 Massen-%, vorzugsweise mehr als 20 Massen-%, mehr als 30 Massen-% oder sogar mehr als 40 Massen-% beträgt.

4. Dämmstoff, umfassend lose Glaswolle in Form von Daunen nach einem der vorhergehenden Ansprüche, **dadurch gekennzeichnet, dass** der Massenanteil von Agglomeraten, die zwischen dem 13-mm- und dem 25-mm-Sieb passieren, im Verhältnis zur Masse der Agglomerate, die das 32-mm-Sieb passieren, mehr als 50 %, vorzugsweise mehr als 55 %, mehr als 60 %, mehr als 70 % beträgt.

5. Dämmstoff, umfassend lose Glaswolle in Form von Daunen nach einem der vorhergehenden Ansprüche, **dadurch gekennzeichnet, dass** der Massenanteil von Agglomeraten, die zwischen dem 13-mm- und dem 32-mm-Sieb passieren, im Verhältnis zur Masse der Agglomerate, die das 32-mm-Sieb passieren, mehr als 60 %, vorzugsweise mehr als 65 %, mehr als 70 % oder sogar mehr als 80 % beträgt.

6. Dämmstoff, umfassend lose Glaswolle in Form von Daunen,
   **dadurch gekennzeichnet, dass** er eine Dichte "d" in kg/m$^3$ und eine Wärmeleitfähigkeit "$\lambda$" in mW.m$^{-1}$.K$^{-1}$ aufweist, die die folgende Beziehung für Dichten d zwischen 7 und 14 kg/m$^3$ erfüllt;

$\lambda$ < A + 0,3d + 205/d, wobei A zwischen 17 und 23, beide Werte inklusive, beträgt.

7. Dämmstoff umfassend lose Glaswolle in Form von Daunen, **dadurch gekennzeichnet, dass** er bei einer Dichte "d" zwischen 9,5 und 10,5 kg/m$^3$ eine Wärmeleitfähigkeit "$\lambda$" von weniger als 42 mW.m$^{-1}$.K$^{-1}$, vorzugsweise weniger als 41 mW.m$^{-1}$.K$^{-1}$, aufweist.

8. Dämmstoff umfassend lose Glaswolle in Form von Daunen, **dadurch gekennzeichnet, dass** er einen Luftdurchtrittswiderstand von größer oder gleich 1 kPa.s/m$^2$, vorzugsweise größer oder gleich 2 kPa.s/m$^2$, vorzugsweise größer oder gleich 5 kPa.s/m$^2$, bei einer Dichte zwischen 10 und 20 kg/m$^3$, vorzugsweise zwischen 10 und 15 kg/m$^3$, aufweist.

9. Dämmstoff, umfassend lose Glaswolle in Form von Daunen nach einem der vorhergehenden Ansprüche, **dadurch gekennzeichnet, dass** die Glaswolle eine Mikronzahl von:

   - weniger als 20 l/min, vorzugsweise weniger als 10 l/min,
   - mehr als 2 l/min, vorzugsweise 4 l/min, mehr als 5 l/min, aufweist.

10. Dämmstoff, umfassend lose Glaswolle in Form von Daunen nach einem der vorhergehenden Ansprüche, **dadurch gekennzeichnet, dass** er mindestens 75 %, vorzugsweise mindestens 95 % Glaswolle, bezogen auf die Gesamtmasse des Dämmstoffs, umfasst.

11. Loser Dämmstoff, umfassend Steinwolle in Form von Daunen, Knäueln oder Flocken, **dadurch gekennzeichnet, dass** die Massenverteilung der Agglomerate, die durch Sieben von 2 bis 5 g Dämmstoff unter Verwendung einer Rüttelsiebmaschine mit einem Siebstapel und einer maximalen Rüttelamplitude von 3 mm erhalten wird, die zwischen 1,5 und 2,5 mm, vorzugsweise zwischen 1,8 und 2,2 mm und besser auf 2 mm eingestellt wird, für die Dauer von 5 Minuten die folgende Beziehung (% Agglomerate 6-13) - (% Agglomerate < 6) $\geq$ 5 % erfüllt, wobei:

    - (% Agglomerate 6-13) dem Massenanteil von Agglomeraten entsprechen, die zwischen dem 6-mm- und dem 13-mm-Sieb passieren, und
    - (% Agglomerate < 6) dem Massenanteil von Agglomeraten entsprechen, die ein 6-mm-Sieb passieren.

12. Dämmstoff, umfassend Steinwolle nach Anspruch 11, **dadurch gekennzeichnet, dass** er die folgende Beziehung erfüllt:

$$(\% \text{ Agglomerate } 6\text{–}13) - (\% \text{ Agglomerate} < 6) \geq 10 \%.$$

13. Dämmstoff, umfassend Steinwolle nach einem der Ansprüche 11 bis 12, **dadurch gekennzeichnet, dass** der Massenanteil von Agglomeraten, die ein 6-mm-Sieb passieren, beträgt:

    - weniger als 40 %, weniger als 45 %, weniger als 30 %, und/oder
    - mehr als 10 %, mehr als 20 %.

14. Dämmstoff, umfassend Steinwolle nach einem der Ansprüche 11 bis 13, **dadurch gekennzeichnet, dass** der Massenanteil von Agglomeraten, die ein 13-mm-Sieb passieren, beträgt:

    - weniger als 95 %, weniger als 90 %, weniger als 80 % und/oder
    - mehr als 50 %, mehr als 60 %, mehr als 70 %.

15. Dämmstoff, umfassend Steinwolle nach einem der Ansprüche 11 bis 14, **dadurch gekennzeichnet, dass** der Massenanteil von Agglomeraten, die zwischen 6-mm- und 13-mm-Sieben passieren, mehr als 40 %, vorzugsweise mehr als 45 %, mehr als 50 %, mehr als 60 % beträgt.

16. Dämmstoff, umfassend Steinwolle nach einem der Ansprüche 11 bis 15, **dadurch gekennzeichnet, dass** der Massenanteil von Agglomeraten, die zwischen 6-mm- und 19-mm-Sieben passieren, mehr als 50 %, vorzugsweise mehr als 55 %, mehr als 60 %, mehr als 70 % beträgt.

17. Dämmstoff, umfassend Steinwolle nach einem der Ansprüche 11 bis 16, **dadurch gekennzeichnet, dass** der Massenanteil von Agglomeraten, die ein 25-mm-Sieb oder ein 34-mm-Sieb passieren, 100 % beträgt.

18. Dämmstoff, umfassend Steinwolle nach einem der Ansprüche 11 bis 17, **dadurch gekennzeichnet, dass** die Steinwolle ineinander verschlungene Mineralfasern mit einer Fasonzahl von mindestens 250 umfasst.

19. Dämmstoff, umfassend Steinwolle in Form von Daunen, Knäueln oder Flocken, **dadurch gekennzeichnet, dass** er eine Dichte "d" in kg/m$^3$ und eine Wärmeleitfähigkeit "$\lambda$" in mW.m$^{-1}$.K$^{-1}$ aufweist, die die folgende Beziehung für Dichten d zwischen 50 und 80 kg/m$^3$ erfüllen:

$\lambda$ < -0,1 d + 45; vorzugsweise $\lambda$ < -0,1 d + 44,5; $\lambda$ < -0,1 d + 44; $\lambda$ < -0,1 d + 43.

20. Dämmstoff umfassend Steinwolle in Form von Daunen, Knäueln oder Flocken, **dadurch gekennzeichnet, dass** er den folgenden Luftdurchtrittswiderstand aufweist:

- größer oder gleich 3 kPa.s/m$^2$ bei einer Dichte zwischen 40 und 50 kg/m$^3$, und/oder
- größer oder gleich 10 kPa.s/m$^2$ bei einer Dichte zwischen 60 und 80 kg/m$^3$.

## Claims

1. An insulating product comprising loose-fill glass wool in the form of down, **characterized in that** the mass distribution of the agglomerates which is obtained by screening 2 to 5 g of insulating product using a vibrating sieve shaker comprising a stack of screens and a maximum amplitude of oscillation of 3 mm set to between 1.5 and 2.5 mm, preferably to between 1.8 and 2.2 mm and better still to 2 mm for 5 minutes, exhibits:

   - a mass percentage of agglomerates passing through the 6 mm screen of less than 5 wt%, preferably less than 3 wt% and/or
   - a mass percentage of agglomerates passing through the 13 mm screen of less than 50 wt%, preferably less than 40 wt%, or even less than 35 wt%.

2. The insulating product comprising loose-fill glass wool in the form of down as claimed in claim 1, **characterized in that** the mass percentage of agglomerates passing through both the 25 mm and 32 mm screens with respect to the agglomerates passing through the 32 mm screen is less than 10 wt%, preferably less than 5 wt%, or even less than 3 wt%.

3. Insulating product comprising loose-fill glass wool in the form of down as claimed in either one of the preceding claims, **characterized in that** the mass percentage of agglomerates passing through both the 19 mm and 25 mm screens with respect to the mass of agglomerates passing through the 32 mm screen is greater than 10 wt%, preferably greater than 20 wt%, greater than 30 wt% or even greater than 40 wt%.

4. The insulating product comprising loose-fill glass wool in the form of down as claimed in any one of the preceding claims, **characterized in that** the mass percentage of agglomerates passing through both the 13 mm and 25 mm screens with respect to the mass of agglomerates passing through the 32 mm screen is greater than 50 %, preferably greater than 55 %, greater than 60 %, greater than 70 %.

5. The insulating product comprising loose-fill glass wool in the form of down as claimed in any one of the preceding claims, **characterized in that** the mass percentage of agglomerates passing through both the 13 mm and 32 mm screens with respect to the mass of agglomerates passing through the 32 mm screen is greater than 60 %, preferably greater than 65 %, greater than 70 %, greater than 80 %.

6. An insulating product comprising loose-fill glass wool in the form of down, **characterized in that** it has a density "d" in kg/m$^3$ and a thermal conductivity "$\lambda$" in mW.m$^{-1}$.K$^{-1}$ that satisfies the following relationship for densities d comprised between 7 and 14 kg/m$^3$; $\lambda$<A+0.3d+205/d, where A is comprised between 17 and 23, inclusive of endpoints.

7. An insulating product comprising loose-fill glass wool in the form of down, **characterized in that** it exhibits, for a density "d" comprised between 9.5 and 10.5 kg/m$^3$, a thermal conductivity "$\lambda$" less than 42 mW.m$^{-1}$.K$^{-1}$, preferably less than 41 mW.m$^{-1}$.K$^{-1}$.

8. An insulating product comprising loose-fill glass wool in the form of down, **characterized in that** it exhibits an airflow resistance greater than or equal to 1 kPa.s/m$^2$, preferably greater than or equal to 2 kPa.s/m$^2$, preferably greater than or equal to 5 kPa.s/m$^2$, for a density comprised between 10 and 20 kg/m$^3$, preferably comprised between 10 and 15 kg/m$^3$.

9. The insulating product comprising loose-fill glass wool in the form of down as claimed in any one of the preceding claims, **characterized in that** the glass wool exhibits a micronaire value:

    - less than 20 L/min, preferably less than 10 L/min,
    - greater than 2 L/min, preferably than 4 L/min, greater than 5 L/min.

10. The insulating product comprising loose-fill glass wool in the form of down as claimed in any one of the preceding claims, **characterized in that** it comprises at least 75%, preferably at least 95% glass wool with respect to the total mass of the insulating product.

11. A loose-fill insulating product comprising rock wool in the form of down, nodules or flakes, **characterized in that** the mass distribution of the agglomerates which is obtained by screening 2 to 5 g of insulating product using a vibrating sieve shaker comprising a stack of screens and a maximum amplitude of oscillation of 3 mm set to between 1.5 and 2.5 mm, preferably to between 1.8 and 2.2 mm and better still to 2 mm for 5 minutes, satisfies the following relationship (% agglomerates 6-13)-(% agglomerates < 6) $\geq$ 5%, where:

    - (% agglomerates 6-13) corresponds to the mass percentage of agglomerates that pass through screens of both 6 mm and 13 mm and
    - (% agglomerates <6) corresponds to the mass percentage of agglomerates passing through a 6 mm screen.

12. The insulating product comprising rock wool as claimed in claim 11, **characterized in that** it satisfies the following relationship

$$\text{(\% agglomerates 6-13)-(\% agglomerates <6)} \geq 10\%.$$

13. The insulating product comprising rock wool as claimed in either one of claims 11 and 12, **characterized in that** the mass percentage of agglomerates passing through the 6 mm screen is:

    - less than 40%, less than 45%, less than 30%, and/or
    - greater than 10%, greater than 20%.

14. The insulating product comprising rock wool as claimed in any one of claims 11 to 13, **characterized in that** the mass percentage of agglomerates passing through the 13 mm screen is:

    - less than 95%, less than 90%, less than 80%, and/or
    - greater than 50%, greater than 60%, greater than 70%.

15. The insulating product comprising rock wool as claimed in any one of claims 11 to 14, **characterized in that** the mass percentage of agglomerates passing through screens of both 6 mm and 13 mm is greater than 40%, preferably greater than 45%, greater than 50%, greater than 60%.

16. The insulating product comprising rock wool as claimed in any one of claims 11 to 15, **characterized in that** the mass percentage of agglomerates passing through screens of both 6 mm and 19 mm is greater than 50%, preferably greater than 55%, greater than 60%, greater than 70%.

17. The insulating product comprising rock wool as claimed in any one of claims 11 to 16, **characterized in that** the mass percentage of agglomerates passing through the 25 mm screen or the 34 mm screen is 100%.

18. The insulating product comprising rock wool as claimed in any one of claims 11 to 17, **characterized in that** the rock wool comprises entangled mineral fibers with a fasonaire value of at least 250.

**19.** An insulating product comprising rock wool in the form of down, nodules or flakes, **characterized in that** it exhibits a density "d" in kg/m$^3$ and a thermal conductivity "$\lambda$" in mW.m$^{-1}$.K$^{-1}$ that satisfy the following relationship for densities d comprised between 50 and 80 kg/m$^3$:

$\lambda < -O.ld + 45$; preferably $\lambda < -O.ld + 44.5$; $\lambda < -O.ld + 44$; $\lambda < -O.ld + 43$.

**20.** An insulating product comprising rock wool in the form of down, nodules or flakes, **characterized in that** it exhibits an airflow resistance:

- greater than or equal to 3 kPa.s/m$^2$ for a density comprised between 40 and 50 kg/m$^3$ and/or
- greater than or equal to 10 kPa.s/m$^2$ for a density comprised between 60 and 80 kg/m$^3$.

**Figure 1.A**

**Figure 1.B**

**Figure 2.A**

**Figure 2.B**

3.A                    3.B                    3.C

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1165998 A
- US 20060266429 A
- JP 2006328609 A
- EP 2511586 A
- FR 2661687 A
- WO 03098209 A